# FASCICULE DE BREVET EUROPEEN

(11) **EP 1 571 079 B1**
(45) Date de publication et mention de la délivrance du brevet: **23.08.2006**
(21) Numéro de dépôt: 05300154.1
(22) Date de dépôt: 01.03.2005
(51) Int. Cl.: B64C 1/06, B64C 1/26

(54) **Longeron de fuselage pour aéronef et caisson central équipé d'un tel longeron**
Rumpfholm für ein Flugzeug und Flügelmittelkasten mit einem solchen Rumpfholm
Fuselage longeron for an aircraft and a central wing box with such a longeron

(30) Priorité: 04.03.2004 FR 0450452
(43) Date de publication de la demande: 07.09.2005
(73) Titulaire: AIRBUS France, 31060 Toulouse (FR)
(72) Inventeur: Sarpy, Bruno, 31150, Fenouillet (FR)
(74) Mandataire: Camus, Olivier Jean-Claude

(56) Documents cités:
- FR-A- 1 004 451
- GB-A- 2 268 461
- GB-A- 2 320 002
- US-A- 2 347 542
- US-A- 5 496 001

## Description

### Domaine de l'invention

L'invention concerne un caisson central de voiture situé dans un fuselage d'aéronef et comportant un longeron de fuselage, muni d'un évidement central. Cet évidement central permet de diminuer la quantité de matière nécessaire à la fabrication du longeron et, donc, sa masse, sans modifier les fonctionnalités principales du longeron telles que le drainage des efforts provenant de la voilure.

L'invention trouve des applications dans le domaine de l'aéronautique et, en particulier, dans le domaine de la réalisation du caisson central de voilure d'un aéronef.

### Etat de la technique

Un aéronef, et en particulier un avion, comporte un corps appelé fuselage et des ailes formant la voilure de l'avion. Cette voilure est montée sur le fuselage et fixée par l'intermédiaire d'un caisson central de voilure dont la fonctionnalité principale est d'assurer la jonction entre les deux ailes opposées de l'avion. Chacune de ces ailes comporte un caisson de voilure équipé d'au moins deux longerons. On appellera, dans le texte, longeron de fuselage, le longeron du caisson central de voilure, situé dans le fuselage de l'aéronef. Le caisson central de voilure reprend l'architecture des caissons de voilure et prolonge cette architecture à l'intérieur du fuselage tout en réalisant l'ensemble des jonctions structurales avec le fuselage. La liaison des pièces constituant les diverses parties du caisson central de voilure et des caissons de voilure ainsi que la liaison des caissons entre eux sont réalisées généralement par éclissage, c'est-à-dire par des éléments de jonctions boulonnés ou rivetés sur lesdites pièces. L'assemblage du caisson central de voilure avec une caisson de voilure est généralement réalisé en posant une éclisse au-dessus d'un élément structurel du caisson central et de l'élément structurel du caisson de voilure correspondant et en maintenant ces éléments, par dessous, au moyen d'une contre éclisse. L'élément de caisson central est ainsi joint à l'élément de caisson de voilure correspondant par éclissage au niveau de la jonction entre le fuselage et la voilure. Le caisson central comporte généralement un panneau extrados et un panneau intrados, parallèles l'un à l'autre. Les panneaux extrados et intrados ont pour rôle de reprendre les efforts de portance de l'avion. Plus précisément, le panneau extrados reprend principalement les efforts de compression subis par la voilure et amenés sur le fuselage par ladite voilure ; le panneau intrados reprend principalement les efforts de traction apportés par la voilure sur le fuselage. Les panneaux extrados et intrados du fuselage sont maintenus au moyen d'au moins deux longerons, un longeron avant et un longeron arrière. Ces longerons du caisson central permettent aussi de reprendre une partie des efforts normaux amenés par la voilure.

Dans certains types d'avions, en particulier ceux dont les caissons de voilure sont de grande emplanture, les caissons de voilure comportent un longeron supplémentaire au centre de la structure. Ce longeron supplémentaire est appelé longeron central. Son rôle est alors d'assurer la reprise de l'effort normal et l'homogénéisation du cisaillement de torsion. Dans ce cas, le caisson central de voilure doit aussi comporter un longeron central pour assurer la continuité des efforts de membrane (efforts normaux) portés par les longerons centraux de la voilure.

Le longeron central de voilure peut être à treillis de bielle. Dans ce cas, le longeron central du fuselage sera aussi à treillis de bielle. Un tel longeron à treillis de bielle comporte une pluralité de barres, verticales ou formant un angle non nul avec l'horizontal, assemblées de façon à maintenir les panneaux extrados et intrados dans une structure rigide. Autrement dit, un longeron en treillis de bielle assure, avec les longerons avant et arrière, la rigidité de l'ensemble du caisson central de voilure, notamment sous les sollicitations d'efforts normaux dus à la pression.

Le longeron central de voilure peut être plein. Dans ce cas, le longeron central du fuselage doit aussi être plein. Ce longeron est dit à âme pleine. Ce longeron est assemblé avec les panneaux extrados et intrados de façon à permettre une certaine rigidité de l'ensemble du caisson central de voilure, notamment sous les sollicitations d'efforts normaux dus à la pression.

Dans le cas d'un caisson de voilure de grande emplanture, le longeron central de voilure doit souvent être plein, pour une meilleure reprise des efforts. Le longeron central du fuselage est donc habituellement à âme pleine. Or, dans le domaine de l'aéronautique, on cherche en permanence à gagner de la masse. Aussi, les fabricants d'avions cherchent à diminuer la quantité de matière sur tous les endroits possibles. C'est pour répondre à cette recherche constante de gain de masse que des longerons en treillis de bielle ont été réalisés et installés dans certains avions. Cependant, de tels longerons peuvent être mis en place dans le caisson situé dans le fuselage uniquement si les longerons de voilure qui lui correspondent ne sont pas pleins. Dans le cas contraire, c'est-à-dire si les longerons de voilure sont à âme pleine, alors un longeron de fuselage en treillis de bielle ne pourrait pas reprendre tous les efforts amenés par les longerons de voilure, car cela solliciterait trop fortement la structure environnante. Il y aurait alors de forts risques de perturbations.

C'est pour cette raison qu'il est habituel de placer un longeron à âme pleine dans le caisson central de voilure, à la jonction avec des longerons de voilure à âme pleine. Par ailleurs, pour répondre à ce problème de gain de masse, des fabriquants ont cherché à réduire l'épaisseur du longeron central de fuselage. Toutefois, lorsque l'épaisseur de ce longeron de fuselage est trop faible, le longeron flambe. Il y a donc une limite inférieure à l'épaisseur de ce longeron.

### Exposé de l'invention

L'invention a justement pour but de remédier aux inconvénients des techniques exposées précédemment. A cette fin, l'invention propose un caisson central de voiture tel qu'il est défini par la revendication 1.

L'invention propose donc d'évider la zone centrale du longeron de fuselage du caisson pour diminuer la masse totale du longeron, sans qu'il n'y ait de conséquence sur la reprise par ledit longeron de l'effort normal provenant du longeron de voilure, puisque cet effort normal est repris par les zones périphériques du longeron.

De façon plus précise, l'invention concerne un caisson central de voiture situé dans un fuselage d'aéronef et comportant au moins un longeron de fuselage monté verticalement entre un panneau extrados et un panneau intrados dudit caisson central et comportant des zones périphériques et une zone centrale. Ce caisson se caractérise par le fait que le longeron comporte un évidement dans la zone centrale, les zones périphériques du longeron assurant un drainage des efforts normaux.

Le caisson de l'invention peut comporter l'une des caractéristiques suivantes :
- l'évidement central a une forme sensiblement ovale,
- les zones périphériques supérieure et inférieure sont amincies en leur centre,
- les zones périphériques supérieure et inférieure sont interrompues en leur centre,
- les zones périphériques latérales sont amincies en leur centre,
- les zones périphériques présentent une épaisseur constante ou une épaisseur variable, décroissante des extrémités de chaque zone vers le centre de chaque zone,
- le longeron comporte deux pièces placées à la verticale l'une de l'autre,
- les deux pièces du longeron comportent chacune un rebord fixé sur un des panneaux intrados ou extrados,
- chaque pièce est fixée sur un des panneaux extrados ou intrados par l'intermédiaire d'une cornière,
- les deux pièces du longeron sont assemblées l'une avec l'autre au moyen d'une éclisse de jonction,
- les deux pièces du longeron sont réalisées dans des matériaux différents.

L'invention concerne aussi un fuselage d'aéronef comportant un tel caisson central de voilure.

### Brève description des dessins

La figure 1 représente schématiquement une vue en coupe d'un caisson central avec les efforts normaux repris par les longerons de ce caisson central.
La figure 2 représente schématiquement un longeron de caisson central, dans l'exemple d'un vol stabilisé de l'aéronef, selon l'invention.
Les figures 3A et 3B représentent différentes formes d'évidement central sur un longeron d'un caisson central selon l'invention.
Les figures 4A et 4B représentent deux modes de réalisation d'un longeron d'un caisson central selon l'invention réalisé en deux parties.
La figure 5 représente deux moyens de fixation d'un longeron d'un caisson central selon l'invention sur les panneaux extrados et intrados de l'avion.

### Description détaillée de modes de réalisation de l'invention

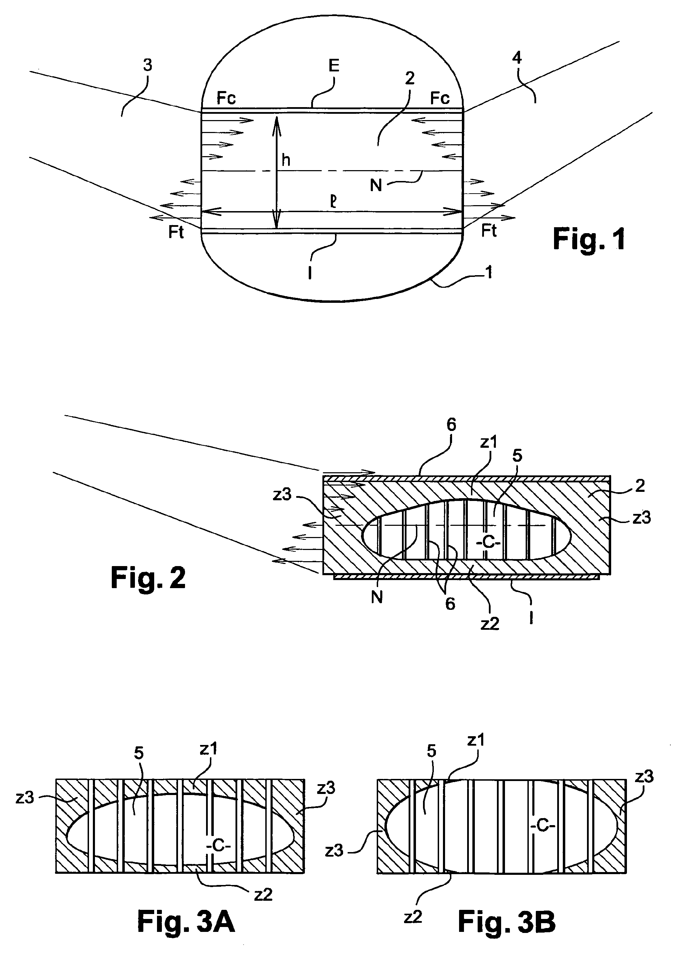

La figure 1 représente une vue en coupe schématique d'un caisson central dans un fuselage d'avion. Cette coupe montre un longeron 2 du caisson central de voilure 1 de l'avion. Comme on le voit sur la figure 1, ce longeron 2 est inscrit dans la circonférence du fuselage. Il est placé entre un premier longeron de voilure 3 et un second longeron de voilure 4, symétrique au premier longeron 3, par rapport au fuselage. En d'autres termes, le longeron 2 du caisson central, appelé par la suite longeron du fuselage, par opposition aux longerons de voilure, est monté à la jonction du premier longeron de voilure 3 et du second longeron de voilure 4. Ces deux longerons de voilure sont à âme pleine.

Le longeron de fuselage 2 est monté verticalement entre un panneau extrados E et un panneau intrados I du caisson central.

Le longeron de fuselage 2 a une forme sensiblement rectangulaire, avec une hauteur h qui est la même que la hauteur du longeron de voilure 3 ou 4 et qui correspond à l'espace entre le panneau extrados E et le panneau intrados I. Ce longeron de fuselage 2 a une longueur I qui correspond approximativement au diamètre du fuselage.

Sur cette figure 1, on voit que chaque longeron de voilure 3 et 4 apporte des efforts normaux à la jonction du longeron de fuselage 2. Ces efforts normaux sont de deux types :
- des efforts de compression Fc qui sont repris essentiellement par le panneau extrados E et des efforts de traction Ft qui sont repris essentiellement par le panneau intrados I. En effet, les efforts les plus importants sont repris par les panneaux intrados et extrados. Une partie des efforts est également reprise par le longeron de fuselage 2, comme montré sur la figure 1. Ces efforts de compression et de traction sont décroissants de l'extrémité du longeron, c'est-à-dire des cotés du longeron situés à proximité des panneaux I et E, vers la ligne médiane de la hauteur du longeron 2. Cette ligne médiane de la hauteur du longeron 2 forme une ligne neutre N. Autrement dit, sur cette ligne N, il n'y a quasiment aucun effort normal, car la sollicitation est homogène à une flexion du caisson.

Dans la plupart des cas, le ligne neutre N se situe au milieu de la hauteur du longeron. Dans toute la description de l'invention, on considérera que la ligne neutre est au milieu de la hauteur du longeron. Cependant, dans certains cas, cette ligne neutre peut être déportée vers le panneau extrados ou le panneau intrados.

La figure 2 représente un longeron de fuselage d'un caisson central selon l'invention. Ce longeron de fuselage, réalisé en une seule pièce, comporte une zone centrale c située au centre de la surface du longeron et des zones périphériques. Ces zones périphériques sont constituées d'une zone supérieure z1, à proximité du panneau extrados E, d'une zone inférieure z2 à proximité du panneau intrados I, et de deux zones latérales z3 à proximité des longerons de voilure.

Selon l'invention, la zone centrale c est évidée. Comme on le verra ultérieurement, cet évidement 5 réalisé en zone centrale c peut avoir plusieurs formes. Dans l'exemple de la figure 2, l'évidement 5 a une forme oblongue. Cette forme peut être adaptée en fonction des exigences, par exemple, en cas de besoin de rigidité selon un axe vertical pour contrer la pression cabine, etc.

La zone centrale évidée c est entourée des deux zones latérales z3, de la zone supérieure z1 et de la zone inférieure z2. Comme on le voit sur la figure 2, les efforts normaux amenés par les longerons de voilure 3 et 4 sont repris par les zones latérales z3 du longeron. Ce sont donc les zones latérales qui assurent le drainage des efforts de tractions et de compression.

L'évidement 5 permet d'alléger la masse du longeron de fuselage 2, sans modifier la reprise des efforts normaux par rapport à un longeron à âme pleine. En effet, dans l'invention, les efforts de membrane sont ramenés vers la peau, c'est-à-dire que les efforts de traction sont ramenés vers le panneau intrados I et les efforts de compression vers le panneau extrados E.

Comme montré sur la figure 2, ce longeron de l'invention est maintenu par des montants verticaux 6, appelés raidisseurs verticaux. Ces raidisseurs verticaux 6 assurent le maintien du longeron en position verticale. Ces raidisseurs 6 ont le même rôle et la même fixation pour un longeron à évidemment central 5 selon l'invention que pour un longeron à âme pleine classique.

Selon un mode de réalisation de l'invention, toutes les zones périphériques du longeron ont une épaisseur identique. Autrement dit, le longeron a une épaisseur constante sur toute sa surface non évidée. Cette épaisseur peut être choisie supérieure à l'épaisseur minimale d'un longeron à âme pleine classique, ce qui permet d'éviter les problèmes de stabilité. En effet, la matière formant le longeron étant plus proche des panneaux intrados et extrados, cette matière est plus efficace que dans le cas d'un longeron à âme pleine classique. Le longeron travaille à un niveau de contrainte supérieur, ce qui permet de diminuer le travail sur des pièces alentours et donc d'alléger en masse ces pièces alentours. En particulier, ces pièces alentours peuvent être le panneau extrados et le panneau intrados. Dans ce cas, on choisit volontairement de limiter le gain de masse du longeron pour gagner de la masse sur les pièces alentours.

Selon un autre mode de réalisation, l'épaisseur du longeron n'est pas constante sur toute la surface non évidée du longeron. Par exemple, l'épaisseur du longeron peut être plus faible dans les parties proches de la ligne neutre N puisque ce sont les parties du longeron les moins sollicitées en efforts, et plus épaisse dans les parties proches des panneaux extrados et intrados qui sont les plus sollicitées en efforts normaux. Une telle variation de l'épaisseur du longeron permet d'assurer une meilleure répartition des efforts, avec une concentration de la matière dans les parties les plus sollicitées. Pour un longeron dimensionné en stabilité, le fait de concentrer la matière sur les parties hautes amène une solution plus épaisse localement, donc plus performante en stabilité pour un même allongement (le flambage étant proportionnel au cube de l'épaisseur). De plus, la matière étant progressivement ramenée au plus loin de la ligne neutre, cela lui donne un maximum d'efficacité par rapport au moment de flexion voilure. Le niveau de travail moyen de la matière est ainsi supérieur à celui d'un longeron classique, offrant ainsi un meilleur rendement de la matière employée.

Sur les figures 3A et 3B, on a représenté deux exemples de formes d'évidement central réalisables sur un longeron d'un caisson central selon l'invention. Dans l'exemple de la figure 3A, l'évidement 5 est ovale. Les zones périphériques supérieure z1 et inférieure z2 sont approximativement identiques et les zones latérales z3 sont aussi identiques. Chacune des zones z1 et z2 est amincie en son centre, c'est-à-dire que la partie située au milieu de la longueur du longeron est moins large que les parties situées aux extrémités de cette longueur. De même, les zones latérales z3 sont amincies en leur centre, c'est-à-dire que la partie située au milieu de la hauteur du longeron est moins large que les parties situées aux extrémités de cette hauteur.

Dans l'exemple de la figure 3B, l'évidement 5 est aussi ovale, avec une section en hauteur plus grande que celle de la figure 3A. Dans cet exemple, les zones latérales z3 sont approximativement identiques et les zones z1 et z2 également. Par contre, dans cet exemple, les zones z1 et z2 sont interrompues en leur centre. Autrement dit, les zones z1 et z2 sont interrompues dans la partie située au milieu de la longueur du longeron. Dans cet exemple, l'évidement c est tel qu'il supprime partiellement les zones supérieure z1 et inférieure z2. La section centrale en hauteur de l'évidement est alors égale à la hauteur du longeron. On comprend aisément qu'une telle forme permet d'alléger au maximum la masse du longeron, sans conséquence sur la reprise des efforts au niveau de la jonction avec la voilure, tout en redistribuant les efforts vers les structures environnantes.

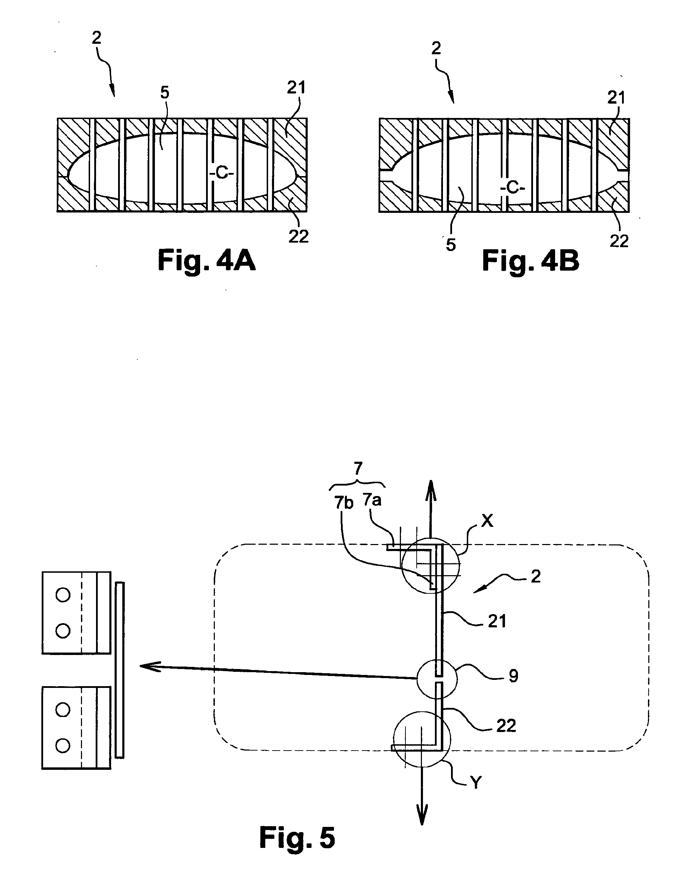

Les figures 4A et 4B représentent deux exemples du longeron d'un caisson central selon l'invention lorsque celui-ci est réalisé en deux pièces.

Le longeron tel qu'il a été décrit précédemment est fixé, comme la plupart des longerons de fuselage, sur les panneaux extrados et intrados du caisson central au moyen de cornières. Un exemple d'une telle cornière est représenté dans la zone X de la figure 5. Une cornière 7 est une pièce en forme de L, en matériau composite ou métallique. Un coté 7a de la cornière est fixé sur un des panneaux extrados ou intrados et un autre côté 7b de la cornière est fixé sur le longeron. La fixation de la cornière est réalisée par boulonnage.

Dans les modes de réalisation des figures 4A et 4B, chaque pièce du longeron peut former une cornière. En d'autres termes, le longeron est réalisé en deux pièces suivant la ligne neutre. Dans l'exemple de la figure 4A, le longeron 2 comporte deux pièces 21 et 22. La pièce 21 est fixée sur le panneau extrados. La pièce 22 est fixée sur le panneau intrados. Chacune de ces pièces 21 et 22 correspond à une moitié du longeron montré sur la figure 2 et coupé suivant la ligne neutre. Ces deux pièces peuvent être reliées par une éclisse de jonction 9 montrée sur la figure 5. Chaque pièce 21 et 22 formant le longeron 2 peut être fixée indépendamment et directement sur un des panneaux intrados ou extrados. Dans ce cas, chacune des deux pièces comporte un rebord placé à angle droit par rapport au panneau de longeron classique. Ce rebord est fixé sur le panneau intrados ou le panneau extrados, par exemple par boulonnage direct sur le panneau considéré, comme montré dans la zone Y de la figure 5.

Dans l'exemple de la figure 4A, les pièces 21 et 22 ont sensiblement la même hauteur. Il est à noter, toutefois, que cette hauteur peut être différente, notamment si la ligne neutre ne se situe pas au milieu de la hauteur du longeron.

Dans un mode de réalisation particulièrement intéressant de l'invention, la pièce 21 et la pièce 22 du longeron 2 peuvent d'être réalisées dans des matériaux différents.

En particulier, on sait qu'il est intéressant d'utiliser un matériau performant en traction / fatigue à l'intrados et un matériau performant en compression / statique à l'extrados. Par exemple, il est intéressant d'utiliser un matériau métallique, par exemple un alliage d'aluminium, pour le panneau extrados et un alliage de carbone pour le panneau intrados. Jusqu'à maintenant, le longeron étant réalisé d'une seule pièce, il est très difficile de réaliser un panneau extrados et un panneau intrados dans deux matériaux différents puisque ces deux panneaux sont reliés par une même pièce, formant le longeron, travaillant à la fois à l'extrados et l'intrados. Ce longeron doit alors être réalisé dans un matériau compatible avec les deux matériaux des deux panneaux intrados et extrados, ce qui se révèle très délicat.

Le mode de réalisation de l'invention qui vient d'être décrit est particulièrement adapté à la réalisation d'un panneau extrados et d'un panneau intrados dans des matériaux différents. En effet, la pièce 21 et la pièce 22 du longeron 2 étant indépendantes, elles peuvent être réalisées dans des matériaux différents. La pièce 21 est réalisée dans un matériau compatible, par exemple, avec l'aluminium et la pièce 22 est réalisée dans un matériau compatible, par exemple, avec le carbone. Comme la jonction des deux pièces 21 et 22 est située sur la ligne neutre, il n'y a pas d'incompatibilité entre les deux pièces. En effet, comme la jonction des deux types de matériaux intervient à un endroit où les contraintes et déformations sont faibles, il n'y à donc aucun problème lié à l'éclissage des deux matériaux très différents. On peut donc éclisser une pièce en aluminium avec une pièce en carbone.

Un tel longeron à évidement central, qu'il comporte une seule ou deux pièces, apporte l'avantage de favoriser la circulation à l'intérieur du caisson central. Il permet le passage des objets et des personnes de maintenance de l'avant vers l'arrière du fuselage facilement, ce qui engendre un gain de productivité sur les phases de maintenance et aussi d'assemblage de l'avion.

## Revendications

1. **Caisson central de voilure situé dans un fuselage d'aéronef et comportant au moins** un longeron de fuselage monté verticalement entre un pannea extrados (E) et un panneau intrados (I) **dudit caisson central et** comportan des zones périphériques (z1 - z3) et une zone centrale (c),
**caractérisé en ce que le longeron comporte** un évidement (5) dans la zone centrale, les zones périphériques dudit longeron assurant un drainage des efforts normaux.

2. **Caisson central de voilure** selon la revendication 1, **caractérisé en ce que** l'évidement **dans la zone centrale du longeron de fuselage** a une forme sensiblement ovale.

3. **Caisson central de voilure** selon l'une quelconque des revendications 1 et 2, dans lequel les zones périphériques **du longeron de fuselage** comportent une zone latérale **(z3)**, **une** zone supérieure (z1) à proximité du panneau extrados et une zone inférieure (z2) à proximité du panneau intrados, **caractérisé en ce que** les zones supérieure et inférieure sont amincies en leur centre.

4. **Caisson central de voilure** selon l'une quelconque des revendications 1 à 3, dans lequel les zones périphériques du longeron de fuselage comportent une zone **latérale, une** zone supérieure à proximité du panneau extrades et une zone inférieure à proximité du panneau intrados, **caractérisé en ce que** les zones supérieure et inférieure sont interrompues en leur centre.

5. **Caisson central de voilure** selon l'une quelconque des revendications 1 à 4, dans lequel les zones périphériques comportent une zone **latérale, une** zone supérieure à proximité du panneau extrados et une zone inférieure à proximité du panneau intrados, **caractérisé en ce que** les zones latérales sont amincies en leur centre.

6. **Caisson central de voilure** selon l'une quelconque des revendications 1 à 5, **caractérisé en ce que** les zones périphériques présentent une épaisseur constante.

7. **Caisson central de voilure** selon l'une quelconque des revendications 1 à 5, **caractérisé en ce que** les zones périphériques présentent une épaisseur variable, décroissante des extrémités de chaque zone vers le centre de chaque zone.

8. **Caisson central de voilure** selon l'une quelconque des revendications 1 à 7, **caractérisé en ce que le longeron** comporte deux pièces (21, 22) placées à la verticale l'une de l'autre.

9. **Caisson central de voiture** selon la revendication 8, **caractérisé en ce que** les deux pièces **du longeron** comportent chacune un rebord fixé sur un des panneaux intrados ou extrados.

10. **Caisson central de voilure** selon la revendication 8, **caractérisé en ce que** chaque pièce du longeron est fixée sur un des panneaux extrados ou intrados par l'intermédiaire d'une cornière (7).

11. **Caisson central de voilure** selon l'une quelconque des revendications 1 à 10, **caractérisé en ce que** les deux pièces du longeron sont assemblées l'une avec l'autre au moyen d'une éclisse, de jonction (9).

12. **Caisson central de voilure** selon l'une quelconque des revendications 1 à 11, **caractérisé en ce que** les deux pièces **du longeron** sont réalisées dans des matériaux différents.

13. **Caisson central de voilure** selon l'une quelconque des revendications 1 à 12, **caractérisé en ce que le longeron de fuselage est placé au centre du caisson central** de voilure, entre un longeron avant et un longeron arrière.

14. **Fuselage d'aéronef, caractérisé en ce qu'il comporte un caisson central selon** l'une quelconque des revendications 1 à 13.

## Claims

1. Central spar box situated between an aircraft fuselage and comprising at least one fuselage spar vertically mounted between an upper surface panel (E) and a lower surface panel (I) of said central spar box and comprising peripheral regions (z1-z3) and a central region (c),
**characterized in that** the fuselage spar comprises a hollowed-out portion (5) in the central zone, the peripheral zones of said spar providing for a draining of the normal loads.

2. Central spar box according to claim 1, **characterized in that** the hollowed-out portion in the central region of the fuselage spar has a substantially oval shape.

3. Central spar box according to one of the claims 1 and 2, in which the peripheral regions of the fuselage spar have a lateral region (z3), an upper region (z1) in the vicinity upper surface panel and a lower region (z2) in the vicinity of the lower surface panel, **characterized in that** the upper and lower peripheral regions are thinned at their center,

4. Central spar box according to any of the claims 1 to 3, in which the peripheral regions of the fuselage spar have a lateral region, an upper region in the vicinity of the upper surface panel and a lower region in the vicinity of the lower surface panel, **characterized in that** the upper and lower peripheral regions are interrupted at their center.

5. Central spar box according to any of the claims 1 to 4, wherein the peripheral regions have a lateral region, an upper region in the vicinity of the upper surface panel and a lower region in the vicinity of the lower surface panel, wherein the lateral regions are thinned at their center.

6. Central spar box according to any of the claims 1 to 5, **characterized in that** the peripheral regions have a constant thickness.

7. Central spar box according to any of the claims 1 to 5, **characterized in that** the peripheral regions have a variable thickness, decreasing from the ends of each region toward the center of each region.

8. Central spar box according to any of the claims 1 to 7, **characterized in that** the spar has two elements (21, 22) placed vertically to each other.

9. Central spar box according to claim 8, **characterized in that** the two elements of the spar each have a shoulder fixed to one of the panels, namely the lower surface or upper surface panels.

10. Central spar box according to claim 8, **characterized in that** each element of the spar is fixed to one of the panels, namely the upper surface or lower surface panels, by means of a corner angle (7).

11. Central spar box according to any of the claims 1 to 10, **characterized in that** the two elements of the spar are joined to each other by means of a bracket joint (9).

12. Central spar box according to any of the claims 1 to 11, **characterized in that** the two elements of the spar are made out of different materials.

13. Central spar box according to any of the claims 1 to 12, **characterized in that** the fuselage spar is placed at the center of the central spar box, between a front spar and a rear spar.

14. Aircraft fuselage comprising at least one central spar box according to any of the claims 1 to 13.

## Patentansprüche

1. Zentraler Tragwerkkasten, der sich in einem Flugzeugrumpf befindet und mindestens einen Längsträger für den Flugzeugrumpf umfasst, der vertikal zwischen einer Oberseitenplatte (E) und einer Unterseitenplatte (I) des Zentralkastens montiert ist und Peripheriezonen (z1-z3) und eine zentrale Zone (c) umfasst,
**dadurch gekennzeichnet, dass** der Längsträger eine Aussparung (5) in der zentralen Zone umfasst, wobei die Peripheriezonen des Längsträgers eine Dränung der normalen Kräfte sicherstellen.

2. Zentraler Tragwerkkasten nach Anspruch 1, **dadurch gekennzeichnet, dass** die Aussparung in der zentralen Zone des Längsträgers des Flugzeugrumpfs eine im Wesentliche ovale Form hat.

3. Zentraler Tragwerkkasten nach einem der Ansprüche 1 und 2, in dem die Peripheriezonen des Längsträgers des Flugzeugrumpfs eine seitliche Zone (z3), eine obere Zone (z1) in der Nähe der Oberseitenplatte und eine untere Zone (z2) in der Nähe der Unterseitenplatte umfassen, **dadurch gekennzeichnet, dass** die obere und die untere Zone in ihrer Mitte dünner sind.

4. Zentraler Tragwerkkasten nach einem der Ansprüche 1 bis 3, in dem die Peripheriezonen des Längsträgers des Flugzeugrumpfs eine seitliche Zone, eine obere Zone in der Nähe der Oberseitenplatte und eine untere Zone in der Nähe der Unterseitenplatte umfassen, **dadurch gekennzeichnet, dass** die obere und die untere Zone in ihrer Mitte unterbrochen sind.

5. Zentraler Tragwerkkasten nach einem der Ansprüche 1 bis 4, in dem die Peripheriezonen eine seitliche Zone, eine obere Zone in der Nähe der Oberseitenplatte und eine untere Zone in der Nähe der Unterseitenplatte umfassen, **dadurch gekennzeichnet, dass** die seitlichen Zonen in ihrer Mitte dünner sind.

6. Zentraler Tragwerkkasten nach einem der Ansprüche 1 bis 5, **dadurch gekennzeichnet, dass** die Peripheriezonen eine konstante Dicke aufweisen.

7. Zentraler Tragwerkkasten nach einem der Ansprüche 1 bis 5, **dadurch gekennzeichnet, dass** die Peripheriezonen eine variable Dicke aufweisen, die von den Enden jeder Zone zur Mitte jeder Zone abnehmend ist.

8. Zentraler Tragwerkkasten nach einem der Ansprüche 1 bis 7, **dadurch gekennzeichnet, dass** der Längsträger zwei Teile (21, 22) umfasst, die vertikal zueinander angeordnet sind.

9. Zentraler Tragwerkkasten nach Anspruch 8, **dadurch gekennzeichnet, dass** die beiden Teile des Längsträgers jeweils einen Rand umfassen, der auf einer der Oberseiten- oder Unterseitenplatte befestigt ist.

10. Zentraler Tragwerkkasten nach Anspruch 8, **dadurch gekennzeichnet, dass** jeder Teil des Längsträgers auf einer der Oberseiten- oder Unterseitenplatten mit Hilfe eines Winkels (7) befestigt ist.

11. Zentraler Tragwerkkasten nach einem der Ansprüche 1 bis 10, **dadurch gekennzeichnet, dass** die beiden Teile des Längsträgers miteinander mit Hilfe einer Verbindungsschiene verbunden sind.

12. Zentraler Tragwerkkasten nach einem der Ansprüche 1 bis 11, **dadurch gekennzeichnet, dass** die beiden Teile des Längsträgers aus unterschiedlichen Materialien bestehen.

13. Zentraler Tragwerkkasten nach einem der Ansprüche 1 bis 12, **dadurch gekennzeichnet, dass** der Längsträger des Flugzeugrumpfes in der Mitte des zentralen Tragwerkkastens zwischen einem vorderen und einem hinteren Längsträger angeordnet ist.

14. Flugzeugrumpf, **dadurch gekennzeichnet, dass** er einen zentralen Tragwerkkasten nach einem der Ansprüche 1 bis 13 umfasst.
